## Europäisches Patentamt

## European Patent Office

## Office européen des brevets

(19)

(11) Publication number: **0 005 023**
**B1**

(12) **EUROPEAN PATENT SPECIFICATION**

(45) Date of publication of patent specification: **13.01.82**

(51) Int. Cl.³: **F 22 B 37/00, B 23 B 3/26**

(21) Application number: **79300582.8**

(22) Date of filing: **09.04.79**

(54) Steam generator tubesheet face machining apparatus.

(30) Priority: **17.04.78 US 896869**

(43) Date of publication of application:
**31.10.79 Bulletin 79/22**

(45) Publication of the grant of the European patent:
**13.01.82 Bulletin 82/2**

(84) Designated Contracting States:
**CH DE FR GB IT SE**

(56) References cited:
**DE - A - 2 636 246**
**US - A - 3 630 109**

(73) Proprietor: **WESTINGHOUSE ELECTRIC CORPORATION**
**Westinghouse Building Gateway Center**
**Pittsburgh Pennsylvania 15222 (US)**

(72) Inventor: **Pekar, Frank Michael**
**8739 Meadowbrook Drive**
**Pensacola Florida (US)**
Inventor: **Cooper, Frank William**
**115 Himalaya Road**
**Monroeville Pennsylvania (US)**

(74) Representative: **van Berlyn, Ronald Gilbert**
**23, Centre Heights**
**London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Steam Generator Tubesheet Face Machining Apparatus

This invention relates to apparatus for effecting retubing of a steam generator in a nuclear power plant.

Nuclear reactor power plants utilize a steam generator having a tube bundle to transfer heat from a primary side reactor-heated-liquid to water on a secondary side to form steam for driving a turbine. Condenser leaks in the power plants have caused circulating water, which is often brackish, to mix with the secondary-side water in the steam generator, resulting in the build-up of undesirable chemicals in the tube bundle. Water treatment and blowdown have not completely protected the steam generator tubes from corrosion and leaks. As the number of tubes subject to such leaks increases, the desirability of replacement or repair of the steam generator increases. Since removal of a steam generator intact from a nuclear power plant requires removal of a large portion of a reinforced concrete containment vessel, replacement of such generator in such manner becomes time consuming, expensive, and therefore undesirable.

In on-site retubing of a nuclear plant steam generator, it has been proposed, for example, to remove a top portion of the steam generator shell to gain access to the tube bundle for removing same. Following removal of the tube bundle tubes for replacement, the faces of the tubesheet must be reconditioned and this must be done remotely, since the area within the steam generator shell is radioactive.

It is therefore the principal object of the present invention to provide an apparatus which can perform such operation by automatic or remote control.

With this object in view, the present invention resides in apparatus for machining the face of a tubesheet disposed in a steam generator shell from which the tubes have been removed, said apparatus being mounted on primary support means welded to the inner wall of said steam generator shell, and secondary support means removably attached to said primary support means, characterized in that said secondary support means consists of a large diameter anti-friction bearing having a non-rotatable outer bearing race mounted on a support ring with adjustable centering means and a rotatable inner bearing race carrying a circular turntable which is parallel to the tubesheet face and removably attached at its outer periphery to said rotatable inner bearing race, said turntable having a machining tool assembly disposed on a face thereof adjacent to said tubesheet for machining the corresponding face thereof during rotary movement of said turntable, said machining tool having a head which is radially movable on said turntable, said turntable having power operated drive means for turning said turntable during operation of said machining tool assembly.

The invention will become more readily apparent from the following description of a preferred embodiment thereof shown, by way of example only, in the accompanying drawings, in which:

Figure 1 is a vertical perspective view of the tube-containing portion of a nuclear power plant steam generator shown partially in section;

Figure 2 is a vertical view partly in outline and partly in section, showing a preferred embodiment of the present invention affiliated with the shell and tubesheet of a steam generator such as shown in Figure 1 from which the tube bundle depicted in such Figure 1 has been removed;

Figure 3 is a bottom view of the apparatus of Figure 1; and

Figure 4 is an alternate mounting arrangement for a machining tool assembly of the apparatus of Figures 2 and 3.

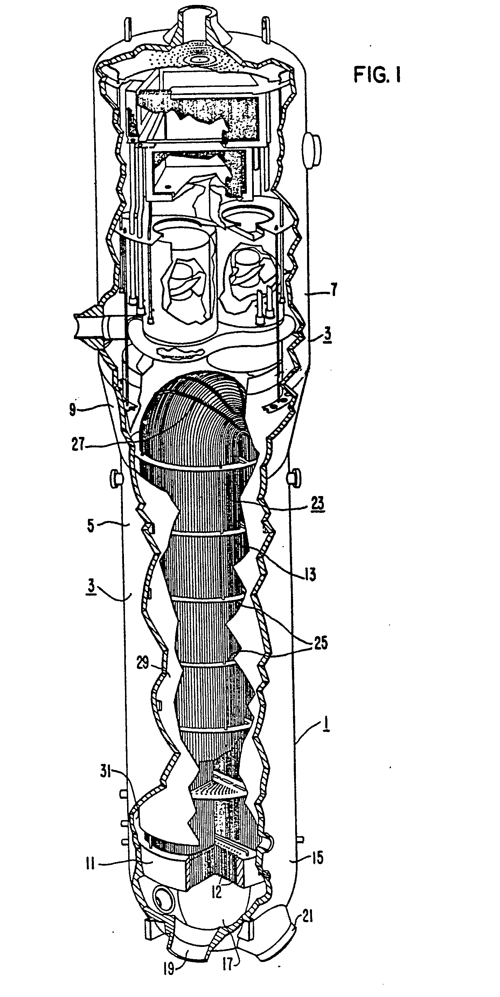

Referring to Figure 1 in the drawings, the steam generator 1 with which the tubesheet face machining apparatus of the present invention is intended to be employed in connection with replacement of the tube bundle 23 therein typically includes a vertically oriented shell 3 having a lower cylindrical portion 5, an upper cylindrical portion 7, larger in diameter than the lower portion, and a frustoconical transition portion 9 joining the lower and upper portions 5 and 7. A tubesheet 11 is disposed in the lower end of the lower portion 5 of the shell and has a plurality of holes 12 for accommodating the ends of U-shaped tubes 13 which extend upwardly from the tubesheet 11 and are closely packed to form the tube bundle 23 disposed vertically within the lower portion 5 of the shell 3.

A hemispherical channel head 15 is fastened to the tubesheet 11 and has a divider plate 17 disposed therein. A primary fluid inlet nozzle 19 supplies heated affluent primary fluid from a nuclear reactor core (not shown) to one portion of the channel head 15 and a discharge nozzle 21 is disposed in the channel head 15 to return the affluent primary fluid to such reactor core.

A plurality of support plates 25 are disposed throughout the tube bundle 23 to support the tubes 13 at various locations along their length to reduce flow-induced vibrations. Antivibration bars 27 are also disposed adjacent to the bends in the tubes 13 to prevent vibration in this portion of the tube bundle 23.

A wrapper or sleeve 29 is disposed between the tube bundle 23 and the shell 3 so as to form an annular space 31 therebetween. The upper part of the upper section 7 of the shell as shown in Figure 1 has been removed to gain access to the interior of the steam generator in preparation for removal and replacement of the tube bundle therein. Various components of the steam generator usually disposed in the upper section 7 of the shell 3 also have been removed from the steam generator as shown in Figure 1 to provide access to the top of the sleeve 29 encircling the tube bundle 23.

Typical operation of the steam generator, which per se forms no part of the present invention, involves the flow of heated primary fluid from a nuclear reactor core upwardly through the tubesheet 11 and one branch of the U-shaped tube bundle 23 and downwardly through the other branch of such tube bundle and back through the tubesheet 11 to the discharge nozzle 21, while secondary fluid above the tubesheet 11 and outside the tube bundle 23 becomes heated to form steam for conveyance by conduit means (not shown) to a turbine (not shown) operated by such steam.

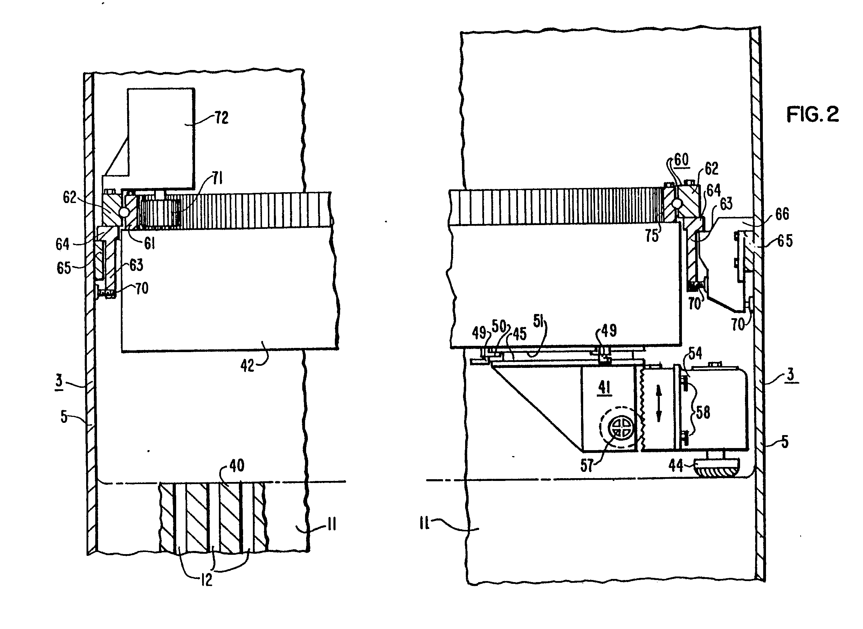

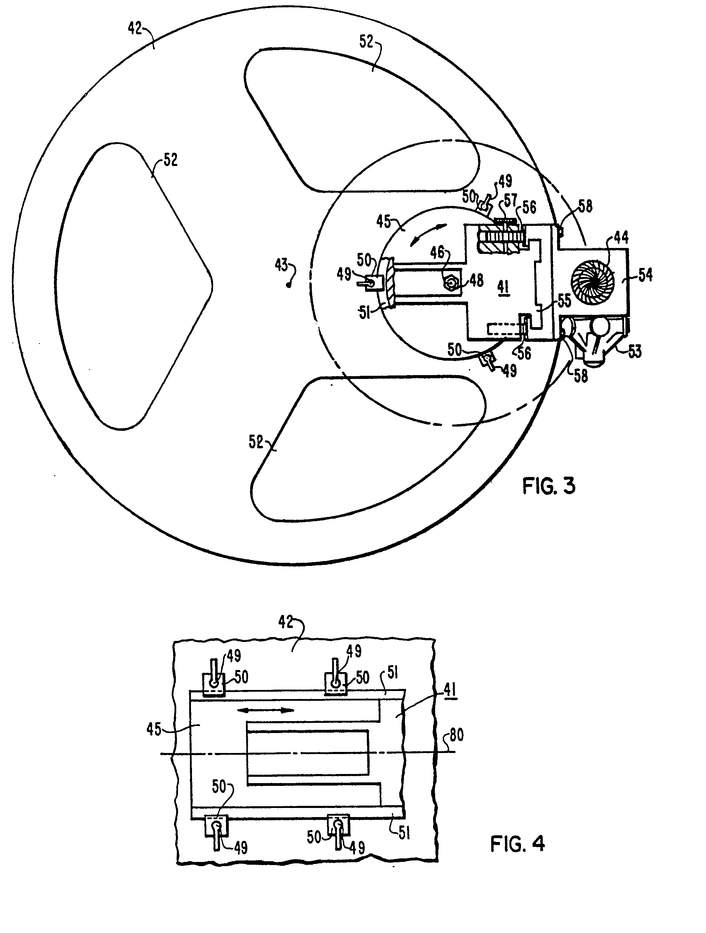

Referring to Figures 2 and 3 in the drawings, the machining apparatus of the present invention is affiliated with the lower section 5 of the shell 3 of the steam generator shown in Figure 1, for machining the upper surface 40 of the tubesheet 11 disposed in such steam generator. In accordance with the presently preferred embodiment, such apparatus comprises a face milling cutter assembly 41 carried on the lower face of a turntable 42 disposed above and parallel to the upper surface 40 of the tubesheet 11. By rotation of the turntable 42 about its central axis 43, a milling cutter head 44 at the lower end of the cutter assembly 41 is caused to machine a circular path on the upper surface 40 of the tubesheet 11. The milling cutter assembly 41 depends from a circular mounting member 45 adapted to assume different lockable rotary positions about a vertical pivot axis 46 located on the turntable 42 at one side of its axis of rotation 43. The cutter assembly 41 is so constructed and arranged that the cutter head 44 occupies the position near the outer periphery of the circular mounting member 45 so that as the rotary position of such mounting member is changed about its pivot axis 46, the radial position of the milling cutter head 44 with respect to the turntable axis 43 is also correspondingly changed. The path along which such cutter head 44 may be positioned about the pivot axis 46 is shown schematically in Figure 3 as the circular dot-dash line 46. It will be understood that in each selected rotary position of the cutter head 44 about the pivot axis 46 of mounting member 45, the turntable 42 will make at least one turn about its central axis 43 to cause a circular machining cut to be made on the upper surface 40 of the tubesheet 11. By suitable choice of such rotary positions for the cutter 44 about the pivot axis 46 and the corresponding choice of rotations of the turntable 42 about its central axis 43 the entire upper surface of the tubesheet 11 may be scanned by the cutter head.

The pivot axis 46 for the mounting member 45 may be defined by a vertical shaft 48 extending downwardly from the turntable. To lock the circular mounting member 45 in any one of its selected rotary positions about the pivot axis 46, a plurality of manually-actuable locking screws 49 are provided that include finger members 50 co-operable with a shoulder 51 in the mounting member 45 to urge such member into locking engagement with a machined surface on the underside of the turntable 42. Operating personnel (not shown) located above the turntable 42 may effect such repositioning of the mounting member 45 for the cutter assembly 41, including locking and unlocking the screws 49 manually, by way of a plurality of through openings 52 extending downwardly through the turntable 42.

The cutter assembly 41 includes such as an hydraulic drive motor 53 operatively connected to the cutter head 44 through the medium of a gear drive mechanism 54. The motor 53, gear mechanism 54, and cutter head 44 are mounted on vertical guide members 55 affiliated with a downwardly extending pedestal part of the assembly to permit adjustment in the vertical positioning of the cutter head 44 to control depth of cut, for example, during machining of the upper surface 40 of the tubesheet 11. To facilitate such vertical adjustment a rack and pinion arrangement 56 operated by a hand wheel 57 is provided. Locking screws 58 provide for securing the cutter head 44 and its drive members in selected vertical positions on the guide members 55. It would be appreciated that the depth of cut adjustment for the cutter head 44 as effected through operation of the hand wheel 57 and of the locking screws 58 will be effectuated manually by way of the through openings 52 in the turntable 42; the rate of rotation of such turntable during operation of the equipment being relatively slow so that the depth of cut adjustment can be made during such turntable rotation, if desired.

The turntable 42 is adapted for turning movement about the central axis of the steam generator shell 3 by way of a large diameter ball bearing assembly 60 having an inner race 61 bolted to the top of the turntable 42 at its outer periphery and an outer annular race 62 that is bolted to the top of a support ring 63 that encircles the turntable 42. The support ring 63 includes an annular flange portion 64 that either directly or indirectly rests on a plurality of support lugs 65 that are welded to the interior of the steam generator shell 3 and disposed in spaced-apart circular array at a selected height above the upper surface 40 of the tubesheet 11. The machining apparatus of the present invention is adapted to be employed with different steam generator shell diameters, such as thirty-three inch, fifty-one inch, forth-four inch, etc. In the case of the smaller diameter, the annular flange 64 of the support ring 63 will rest directly on top of the support lugs 65 welded to the generator shell as shown in the left-hand portion of the drawing in Figure 2. By the use of spacer members 66 removably attached to the lugs 65 welded to the tube shell 3, as shown in the right-hand portion of the drawing of Figure 2, the machining apparatus can be adapted for operation in the larger sizes of such generator shell. For centering of the support ring 63 within the shell 3, and thereby centering the turntable 42 coaxially within such shell, a plurality of jack screws 70 are provided.

For effecting turning of the turntable 42 to obtain the feeding of the rotating cutter head 44 along its circular paths atop the tubesheet 11, the apparatus is provided with a drive gear 71 operated by a motor 72 mounted on the outer ring 62 of the ball bearing assembly. The drive gear 71 co-operates with teeth 75 formed in the inner periphery of the inner race 61 of the ball bearing assembly 60.

It will be apparent from the foregoing that other tools may be substituted for the milling cutter head 44. For example, in some circumstances it may be desirable to provide for reboring of the tube holes 12 in the tubesheet 11, in which case a drilling or boring tool would be substituted for the face milling cutter head 44.

Referring to Figure 4, rather than being turnable about the pivot axis 46, the mounting member 45 may be reconfigured and made positionable along a straight-line radial path 80 on the turntable 42 to change the radius of the circular cutting path taken by the cutter head 44 during machining operation.

## Claims

1. Apparatus for machining the face (40) of a tubesheet (77) disposed in a steam generator shell (3) from which the tubes have been removed, said apparatus being mounted on primary support means (65) welded to the inner wall of said steam generator shell (3), and secondary support means (63, 60) removably attached to said primary support means, characterized in that said secondary support means (63, 60) consists of a large diameter anti-friction bearing (60) having a non-rotatable outer bearing race (62) mounted on a support ring (63) with adjustable centering means (70) and a rotatable inner bearing race (61) carrying a circular turntable (42) which is parallel to the tubesheet face (40) and removably attached at its outer periphery to said rotatable inner bearing race (61), and that a machining tool assembly (41) is pivotally mounted on said turntable (42) with a pivot axis normal to said turntable (42) and on a face (40) thereof adjacent to said tubesheet (77) for machining the corresponding face of the tubesheet (77) during rotary movement of said turntable (42), said machining tool (41) having a head (44) which is radially movable on said turntable (42), said turntable (42) having power operated drive means (72) for turning said turntable (42) during operation of said machining tool assembly (41).

2. An apparatus as claimed in claim 1, characterized in that said support ring (63) encircles said turntable and supports said outer bearing race (62), said inner bearing race (61) having gear teeth (75) at its inner surface, and said drive means (72) being a motor supported on said outer bearing race (62) and having a gear (71) in engagement with the gear teeth (75) of said inner bearing race (61).

3. An apparatus as claimed in claim 1 or 2, characterized in that said machining tool assembly (41) includes a power-operated cutter head (44) and adjustable support means (55, 56) for advancing and retracting the position thereof relative to the aforesaid tubesheet (40) to be machined.

## Revendications

1. Appareil pour usiner la face (40) d'une plaque tubulaire (11) disposée dans une enveloppe (3) de générateur de vapeur d'eau dont les tubes ont été enlevés, ledit appareil étant monté sur un moyen de support principal (65) soudé à la paroi intérieure de ladite enveloppe (3) de générateur de vapeur d'eau, et sur un moyen de support secondaire (63, 60) fixé de façon amovible audit moyen de support principal, caractérisé par le fait que ledit moyen de support secondaire (63, 60) est constitué par un roulement (60) de grand diamètre comportant une bague de roulement extérieure non-rotative (62) montée sur une bague de support (63) à l'aide d'un moyen de centrage réglable (70) et une bague de roulement intérieure rotative (61) supportant un plateau tournant circulaire (42) qui est parallèle à la face (40) de la plaque tubulaire et qui est fixé de façon amovible à sa périphérie extérieure à ladite bague de roulement intérieure rotative (61) et qu'un outillage d'usinage (41) est monté de façon pivotante sur ledit plateau tournant (42), son axe de pivotement étant perpendiculaire audit plateau tournant (42), et sur la face (40) de ce plateau qui est adjacente à ladite plaque tubulaire (11) pour usiner la face correspondante de la plaque tubulaire (11) pendant la rotation dudit plateau tournant (42), ledit outillage d'usinage (41) comportant une tête (44) qui peut être déplacée radialement sur ledit plateau tournant (42), ledit plateau tournant (42) comportant un moyen d'entraînement (72) actionné mécaniquement pour faire tourner ledit plateau tournant (42) pendant le fonctionnement dudit outillage d'usinage (41).

2. Appareil suivant la revendication 1, caractérisé par le fait que ladite bague de support (63) entoure ledit plateau tournant et supporte ladite bague de roulement extérieure (62), ladite bague de roulement extérieure (61) comportant des dents (75) sur sa surface intérieure, et ledit moyen d'entraînement (72) étant un moteur supporté par ladite bague de roulement extérieure (62) et comportant un pignon (71) engrènant avec les dents (75) de ladite bague de roulement intérieure (61).

3. Appareil suivant les revendications 1 ou 2, caractérisé par le fait que ledit outillage d'usinage (41) comprend une tête de coupe (44) actionnée mécaniquement ainsi qu'un moyen de support réglable (55, 56) pour avancer et reculer la position de cette tête par rapport à la plaque tubulaire précitée (40) devant être usinée.

**Ansprüche**

1. Vorrichtung zum Bearbeiten der Oberfläche (40) eines im Gehäuser (83) eines Dampferzeugers eigebauten Rohrbodens (11), von dem die Rohre (13) enfernt wurden, wobei die Vorrichtung auf Stutzeinrichtungen (63, 60) montiert ist, von denen die erste (63) an die Innenwand des Dampferzeugergehäuses (3) angeschweisst und die zweite (60) abmontierbar an der ersten (63) befestigt ist, dadurch gekennzeichnet, dass die zweite Stützvorrichtung (60, 63) aus einmem Wälzlager (60) grossen Durchmessers mit einem äusseren auf einem Stützring (63) mit einstellbarer Zentrierung (70) gelagerten feststehenden Lagerring (62) und einem drehbaren inneren Lagerring (61) besteht, an dem ein runder Drehtisch (42) parallel zur Rohrbodenoberfläche (40) lösbar an seinem Umfang befestig ist, wobei ein Bearbeitungswerkzeug (41) auf der dem Rohrboden (11) zugewandten Seite des Drehtisches (42) um eine zum Drehtisch (42) senkrechte Achse schwenkbar montiert ist, um ein Bearbeiten der gegenüberliegendem Rohrbodenoberfläche (40) beim Drehen des Drehtisches (42) zu ermöglichen, dass ferner das Bearbeitungswerkzung (41) einen auf dem Drehtisch (42) in radialer Richtung bewegbaren Arbeitskopf (44), und dass der Drehtisch (42) mit einem Antriebsmechanismus (72) zum Drehen des Drehtisches während des Betriebs des Bearbeitungswerkzeuges (41) ausgerüstet ist.

2. Vorrichtung nach Anspruch 1, dadurch gekennzeichnet, dass der Stützring (63) den Drehtisch (42) ungebt und den äusseren Lagerring (62) trägt, und dass der innere Lagerring (61) mit einer Innenverzahnung (75) versehen ist, wobei der Antriebsmechanismus (72) aus einem am äusseren Lagerring (62) befestigten Antriebsmotor mit einem in die Innenverzahnung (75) eingreifenden Antriebsritzel (71) besteht.

3. Vorrichtung nach Anspruch 1 oder 2, dadurch gekennzeichnet, dass das Bearbeitungswerkzeug (41) einen Motor-betriebenen Schneidekopf (44) und eine den Schneidekopf (44) relative zum Rohrboden (11) hin und her verstellbare Haltevorrichtung aufweist.

FIG. I

FIG.2

FIG. 3

FIG. 4